(19) Europäisches Patentamt
European Patent Office
Office européen des brevets

(11) Publication number: 0 322 558 A2

(12) **EUROPEAN PATENT APPLICATION**

(21) Application number: 88119309.8

(51) Int. Cl.4: C08L 77/00 , C08L 55/02

(22) Date of filing: 21.11.88

(30) Priority: 30.12.87 US 139483

(43) Date of publication of application: 05.07.89 Bulletin 89/27

(84) Designated Contracting States: DE FR GB IT NL

(71) Applicant: GENERAL ELECTRIC COMPANY
1 River Road
Schenectady New York 12305(US)

(72) Inventor: Fox, Daniel Wayne
193 Dawes Avenue
Pittsfield Massachusetts 01201(US)
Inventor: Shafer, Sheldon Jay
40 Day Street
Pittsfield Massachusetts 01201(US)
Inventor: Maresca, Louis Michael
100 East Covent Garden
Guilderland New York 12084(US)
Inventor: Clagett, Donald Carl
193 Barlett Avenue
Pittsfield Massachusetts 01201(US)

(74) Representative: Catherine, Alain
General Electric France Service de Propriété Industrielle 18 Rue Horace Vernet B.P. 76
F-92134 Issy-les-Moulineaux Cédex(FR)

(54) **Blends of thermoplastic abs resins and amorphous polyamides.**

(57) Thermoplastic blends of amorphous polyamides and acrylonitrile-butadiene-styrene type polymer resins have excellent physical properties and barrier resistance to oxygen and carbon dioxide.

EP 0 322 558 A2

# BLENDS OF THERMOPLASTIC ABS RESINS AND AMORPHOUS POLYAMIDES

## FIELD OF THE INVENTION

The present invention relates to thermoplastic resin blends comprising an amorphous polyamide resin and acrylonitrile-butadiene-styrene (ABS) type polymers.

## BACKGROUND OF THE INVENTION

Polyamides, more commonly referred to as nylons, are thermoplastic materials which feature repeating amide groups. They are generally semicrystalline, have superior load-bearing capability at elevated temperatures, good toughness, low frictional properties, and good chemical resistance. Amorphous polyamide resins are transparent, although they can be tinted or colored opaquely. They are frequently used in applications requiring transparency, toughness, and chemical resistance. In addition, while most nylons are inherently hydroscopic, amorphous nylons tend to have significantly lower water absorption levels at equilibrium.

In recent years, nylons have been blended with various copolymers to yield products which have improved properties for their particular use. For example, alloys of nylon with olefin copolymers yield high-performance injection molding compounds with improved toughness and lowered water absorption. Blends of crystalline nylons with sulphone polymers are disclosed in U.S. 4,503,168 (Hartsing Jr.) in order to enhance the solvent resistance of the sulphone polymers. Amorphous polyamides have been improved by the addition of various impact modifiers when additional strength is desired. Such impact modifiers are typically natural or synthetic rubber compounds including polymeric and copolymeric compounds such as butadiene rubber, EPDM rubber, di- and triblock copolymers of styrene and butadiene, as well as other elastomeric products. Many of these are commercially available from a variety of sources.

ABS polymers, which are composed of acrylonitrile, butadiene and styrene monomers (and hence the name), provide a three-monomer system which can be widely varied to meet the particular needs of the user. The polymer is composed of a butadiene backbone which is grafted with styrene-acrylonitrile (SAN) copolymer. The acrylonitrile monomer contributes heat stability, aging and chemical resistance while the butadiene provides impact strength, toughness and low-temperature property retention. The styrene monomer contributes glass, rigidity and processing ease. These properties can be varied by the degree of grafting, and by changing the molecular weight of free and grafted styrene-acrylonitrile which are present on the butadiene backbone.

ABS polymers have good overall chemical resistance, but, like many other thermoplastics, have poor resistance to light. Tensile strength at yield varies depending upon the relative concentrations of the three monomers from approximately 3000 to 9000 p.s.i. Strain at yield typically is 2 to 5%, while ultimate elongation varies widely, depending on the relative concentrations of the monomers.

It is well-known to combine ABS polymers with polycarbonates, which contribute higher heat resistance and better impact resistance, toughness, tensile properties and flame retarding than ABS alone. ABS-polyvinyl chloride blends have been shown to have particularly good impact strength, toughness, flammability. ABS-polysulfone blends have been shown to have high heat resistance, good chemical resistance, exceptional toughness, while being easily fabricated. Other well-known ABS blends include ABS/ethylene vinyl acetate, ABS/ethylene propylenediene rubber, ABS/chlorinated polyethylene and ABS/polyurethane. These blends generally have improved impact resistance.

More recently, crystalline nylon and ABS have been blended to yield compositions which have improved properties such as improved chemical and warp resistance, good flow and surface appearance and improved stability at higher temperatures over that of ABS polymers alone. These blends are described in the Modern Plastics Encyclopedia, McGraw-Hill Incorporated, Volume 63, Number 10A, October 1986.

It has now been discovered, according to the present invention, that blends of amorphous nylon and ABS are surprisingly tough and have excellent mechanical properties and chemical resistance. Relative to crystalline nylon/ABS blends referred to above, these materials have improved thermal stability and barrier properties (such as reducing the permeabililty of the ABS to gases, such as $CO_2$ and $O_2$) and lower water absorption, and therefore better dimensional stability. The ABS improves the impact properties of amorphous nylon and lowers cost.

## SUMMARY OF THE INVENTION

Briefly, according to the present invention, there are provided amorphous polyamide blends with ABS type polymers having unexpectedly improved barrier resistance, thermal stability and dimensional stability. Such blends comprise:

(i) a high molecular weight ABS type thermoplastic resin comprising a poly(vinyl aromatic) compound, a poly(diene) and a poly(acrylonitrile) compound; and

(ii) an amorphous polyamide resin.

The resultant thermoplastic resin composition preferably comprises from about 2 to about 98 percent by weight of the ABS type compound (i) and from about 98 parts to about 2 parts by weight of the amorphous polyamide resin (ii). In preferred embodiments, the ratio of ABS resin to amorphous polyamide is from about 2/98 to about 98/2 by weight.

## DETAILED DESCRIPTION OF THE INVENTION

The ABS polymer suitable as component (i) is a polymerizate of a conjugated diene, such as butadiene or another conjugated diene such as isoprene, alone, or with a monomer copolymerizable therewith, such as styrene, providing a polymeric backbone. After formation of the backbone, at least one grafting monomer, such as styrene and preferably two, such as styrene and acrylonitrile are polymerized in the presence of the prepolymerized backbone to obtain the graft polymer. These resins are prepared by methods well known in the art.

The backbone polymer, as mentioned, is preferably a conjugated diene polymer such as polybutadiene, polyisoprene, or a copolymer, such as butadiene-styrene, butadiene-acrylonitrile, or the like. In preferred embodiments the backbone polymer is a styrene-butadiene copolymer.

The specific conjugated diene monomers normally utilized in preparing the backbone of the graft polymer are generically described by the following formula:

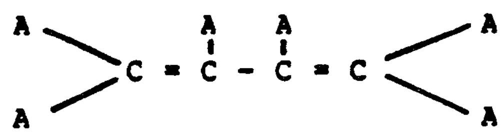

wherein A is selected from the hydrogen, alkyl of from one to five carbon atoms, chlorine or bromine. Examples of dienes that may be used are butadiene, isoprene, 1,3-heptadiene, methyl-1,3-pentadiene, 2,3-dimethyl-1,3- butadiene, 2-ethyl-1,3-pentadiene; 1,3 and 2,4-hexadienes, chloro and bromo substituted butadienes such as dichlorobutadiene, bromobutadiene, dibromobutadiene, mixtures thereof, and the like.

One monomer or group of monomers which may be polymerized in the presence of the prepolymerized backbone are mono-vinylaromatic hydrocarbons, exemplified by styrene. The mono-vinylaromatic monomers utilized are generically described by the following formula:

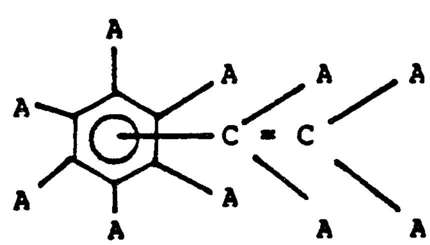

wherein A is as previously defined. Examples of the mono-vinylaromatic compounds are alkyl-, cycloalkylaryl,-alkylaryl-, arylalkyl-, alkoxy-, aryloxy-, and other substituted vinylaromatic compounds include styrene, 3-methylstyrene; 3,5-diethylstyrene, 4-n-propylstyrene, p-bromostyrene, dichlorostyrene, dibromostyrene, tetrachlorostyrene, mixtures thereof, and the like. The preferred mono-vinylaromatic hydrocarbons used are styrene and/or an alpha-methylstyrene.

A second group of monomers that are to be polymerized in the presence of the prepolymerized backbone are acrylic monomers such as acrylonitrile, substituted acrylonitriles such as methacrylonitrile.

The acrylonitrile or substituted acrylonitriles, are described generically by the following formula:

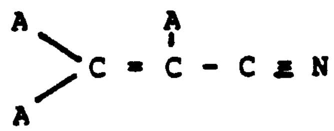

wherein A is as previously defined. Examples of such monomers include acrylonitrile, ethacrylonitrile, methacrylonitrile, alpha-chloroacrylonitrile, alpha-chloroacrylonitrile, alpha-bromoacrylonitrile, and alpha-bromomethacrylonitrile, and mixtures thereof. The preferred acrylic monomer is acrylonitrile.

In the preparation of the graft polymer, the conjugated diolefin polymer or copolymer exemplified by a 1,3-butadiene polymer or copolymer comprises about 50% by weight of the total graft polymer composition. The monomers polymerized in the presence of the backbone, exemplified by styrene and acrylonitrile, comprise the remainder of the total weight of the polymer composition.

The ABS polymers described herein can be prepared by all of the commonly used techniques for thermoplastics including emulsion, suspension, mass polymerization, and combinations thereof.

Polyamides suitable as component (ii) for the preparation of the blends of the present invention may be obtained by polymerizing a monoamino-monocarboxylic acid or a lactam thereof having at least 2 carbon atoms between the amino and carboxylic acid group; or by polymerizing substantially equimolar proportions of a diamine which contains at least 2 carbon atoms between the amino groups and a dicarboxylic acid; or by polymerizing a monamino-monocarboxylic acid or a lactam thereof as defined above together with substantially equimolecular proportions of a diamine and a dicarboxylic acid. The dicarboxylic acid may be used in the form of a functional derivative thereof, for example, an ester or acid chloride. The term "substantially equimolecular" proportions (of the diamine and of the dicarboxylic acid) is used to cover both strict equimolecular proportions and slight departures therefrom which are involved in conventional techniques for stabilizing the viscosity of the resultant polyamides.

Examples of the aforementioned monoamino-monocarboxylic acids or lactams thereof which are useful in preparing the polyamides include those compounds containing from 2 to 16 carbon atoms between the amino and carboxylic acid groups, the carbon atoms forming a ring with the -CO-NH- group in the case of a lactam. As particular examples of aminocarboxylic acids and lactams there may be mentioned: aminocaproic acid, butyrolactam, pivalolactam, caprolactam, capryllactam, enantholactam, undecanolactam, dodecanolactam and 3- and 4-aminobenzoic acids.

Diamines suitable for use in the preparation of the polyamides include the straight chain and branched, alkyl, aryl and alkyl-aryl diamines. Such diamines include, for example, those represented by the general formula:

$H_2N(CH_2)_nNH_2$

wherein n is an integer of from 2 to 16, such as ethylenediamine, propylenediamine, tetramethylenediamine, pentamethylenediamine, 2-methylpentamethylenediamine, hexamethylenediamine and the like. Other diamines include isomeric trimethylhexamethylenediamine, meta-xylylenediamine, para-xylylenediamine, 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, 1,4-piperazine, meta-phenylenediamine, para-phenylenediamine, bis(4-aminophenyl)methane, and the like, or a mixture of any of the foregoing.

The dicarboxylic acids may be aromatic or aliphatic dicarboxylic acids of the formula:

HOOC-Z-COOH

wherein Z represents a divalent aliphatic group containing at least 2 carbon atoms or an aromatic group containing at least 6 carbon atoms. Examples of such acids are sebacic acid, suberic acid, glutaric acid, pimelic acid, adipic acid, azeleic acid, terephthalic acid, isophthalic acid and the like.

Typical examples of the polyamides include, for example, copolymers of polyamides 6, 6/6, 11,12, 6/3, 6/4, 6/10 or 6/12; polyamides resulting from the condensation of terephthalic acid and/or isophthalic acid and trimethylhexamethylene diamine; polyamides resulting from the use of adipic acid and meta-xylylenediamines; polyamides resulting from the use of adipic acid, azelaic acid and 2,2-bis(p-aminocyclohexyl)propane; and polyamides resulting from the use of terephthalic acid and 4,4′-diaminodicyclohexylmethane. Mixtures and/or copolymers of two or more of the foregoing polyamides or prepolymers thereof, respectively, are also within the scope of the present invention.

The polyamides described herein are either commercially available or can be produced by methods well known in the art.

It is also to be understood that the use of the term "polyamides" herein and in the appended claims is intended to include the toughened or super tough polyamides. Super tough polyamides, or super tough nylons, as they are more commonly known, are available commercially, e.g., from E.I. dupont under the tradename Zytel • ST, or may be prepared in accordance with a number of patents including, among others, Epstein, U.S. 4,174,358; Novak, U.S. 4,474,927; Roura, U.S. 4,346,296; and Joffrion, U.S. 4,251,644. These super tough nylons are prepared by blending one or more polyamides with one or more polymeric or copolymeric elastomeric toughening agents. Suitable toughening agents are disclosed in the above-identified U.S. Patents as well as in Caywood, Jr., U.S. 3,884,882, and Swiger, U.S. 4.147,740 and Gallucci et al., "Preparation and Reaction of Epoxy-Modified Polyethylene", J. APPL. POLY. SCI., V. 27,pp. 425 - 437 (1982). Typically, these elastomeric polymers and copolymers may be straight chain or branched as well as graft polymers and are copolymers, including core-shell graft copolymers, and are characterized as having incorporated therein either by copolymerization or by grafting on the preformed polymer, a monomer having functional and/or active or highly polar groupings capable of interacting with or adhering to the polyamide matrix so as to enhance the toughness of the polyamide polymer.

In general, it is true that all polyamides have both a crystalline and an amorphous state. However, as a practical matter, it is difficult to obtain many of the polyamides in the amorphous state. Symmetrical, hydrogen-bonded, linear polyamides are, invariably, highly crystalline with well defined x-ray patterns. Thus, it is difficult to avoid high degrees of crystallinity with polymers, e.g., nylon-6,6; -6,10; and -6, whose regular structures permit good chain alignment and high degrees of hydrogen bonding in the plane of the chains. Chain stiffness also contributes to crystallinity, rendering hydrogen bonding unnecessary for crystallinity where chain stiffness and symmetry are sufficiently high. Ring-containing polyamides, especially aromatic ring-containing polyamides such as polyterephthalamides, have high stiffness and tend to crystallinity.

Thus, it is within the skill of persons knowledgeable in the art to produce amorphous polyamides through any one or a combination of several methods. Faster polyamide melt cooling tends to result in an increasingly amorphous resin. Side chain substitutions on the polymer backbone, such as the use of a methyl group to disrupt regularity and hydrogen bonding, may be employed. Non-symmetric monomers, for instance, odd-chain diamines or diacids and meta aromatic substitution, may prevent crystallization. Symmetry may also be disrupted through copolymerization, that is, using more than one diamine, diacid or monoamino-monocarboxylic acid to disrupt regularity. In the case of copolymerization, monomers which normally may be polymerized to produce crystalline homopolymer polyamides, for instance, nylon 6; 6/6; 11; 6/3; 4/6; 6/4; 6/10; or 6/12, may be copolymerized to produce a random amorphous copolymer. Amorphous polyamides for use herein are generally transparent with no distinct melting point, and the heat of fusion is about 1 cal/gram or less. The heat of fusion may be conveniently determined by use of a differential scanning calorimeter (DSC).

Blends of ABS type polymers (i) with amorphous polyamides (ii) in any proportion will at least in some degree exhibit characteristics embodying the present invention. However, as a practical matter, the benefits of such a blend will not be measurably significant outside a weight ratio of from about 2/98 to about 98/2 amorphous polyamide to total ABS content. Preferably, the weight ratio is between about 10/90 to about 90/10 polyamide to total ABS content.

Of course, the blends herein may contain other thermoplastic resins, various impact modifiers, stabilizers, flame retardants, mold release agents, reinforcing agents, pigments, and the like. Examples of the other thermoplastic resins include poly(etherimides), polysulfones, polyphenylene oxides, and the like. Generally, such other thermoplastic resins should not constitute greater than 80% by weight of total thermoplastic content. Many additives are widely used and recognized as suitable for use herein.

The thermoplastic blends of the present invention are simply prepared by standard techniques; for example, by simple melt blending or dry mixing and melt extruding at an elevated temperature. The extruded admixture is then molded into a piece of specific dimensions or further extruded into a film or sheet product.

## DESCRIPTION OF THE PREFERRED EMBODIMENTS

The following examples illustrate the invention, but are not intended to limit the claims.

## EXAMPLE 1

An amorphous nylon/ABS blend (75/25 weight ratio) was prepared by melt blending Zytel 330 (E.I. duPont) with Cyclolac X37 (Borg Warner) in a Werner Pfleiderer ZSK, 30mm twin screw extruder at barrel temperatures ranging from 390° - 460° F. The amorphous nylon was dried for a minimum of 6 hours in an air circulating oven at 110° C prior to extrusion. The resulting pelletized product was redried under similar conditions before being molded into ASTM test specimens on a 3 oz, 70 ton Newbury injection molding machine at 475° F. Mechanical properties for this blend are summarized in Table 1.

## EXAMPLE 2

Example 1 was repeated except that the Zytel 330/Cyclolac X37 weight ratio was changed to 50/50. Mechanical properties for this blend are summarized in Table 1.

## EXAMPLE 3

Example 2 was repeated except that Cyclolac GSM (Borg Warner) was substituted for the Cyclolac X37. Mechanical properties for this blend are summarized in Table 1.

## EXAMPLES 4 - 6

Examples 1 - 3 were repeated except that ST 901 (E.I. DuPont), an impact modified amorphous nylon, was substituted for Zytel 330. Mechanical properties for these blends are summarized in Table 1.

As is readily apparent from the results set forth in Table 1, the amorphous polyamide/ABS blends have excellent mechanical properties and thermal and dimensional stability.

TABLE 1

| Composition (Weight %) | Example | | | | | |
|---|---|---|---|---|---|---|
| | 1 | 2 | 3 | 4 | 5 | 6 |
| Zytel 330[a] | 75 | 50 | 50 | - | - | - |
| ST 901[b] | - | - | - | 75 | 50 | 50 |
| Cyclolac X37[c] | 25 | 50 | - | 25 | 50 | - |
| Cyclolac GSM[d] | - | - | 50 | - | - | 50 |
| Mechanical Properties | | | | | | |
| Tensile Strength (Kpsi) | | | | | | |
| Yield | 13.1 | 10.7 | 10.3 | 8.6 | 7.8 | 7.8 |
| Break | 9.9 | 8.0 | 7.5 | 6.5 | 6.7 | 6.4 |
| Tensile Modulus (Kpsi) | 345.3 | 394.6 | 389.5 | 303.5 | 327.6 | 322.1 |
| Elongation @ Break (%) | 10.4 | 15.2 | 20.4 | 38.9 | 30.4 | 38.2 |
| Notched Izod Impact (Ft-lb/in) | 2.7 | 0.8 | 1.2 | 5.3 | 3.7 | 1.6 |
| HDT (°F) @ 66 psi | 243.9 | 226.1 | 213.9 | 236.7 | 223.7 | 203.1 |

[a] An amorphous polyamide resin comprising poly(hexamethylene iso/terephthalamide) available from E.I. duPont Co.
[b] An amorphous polyamide resin comprising poly (hexamethylene iso/terephthalamide) available from E.I duPont Co.
[c] An ABS type resin available from Borg Warner Company
[d] An ABS type resin available from Borg Warner Company

The above-mentioned patents and any applications or publications are hereby incorporated by reference.

Many variations will suggest themselves to those skilled in the art in light of the foregoing detailed description. All such obvious variations are within the full intended scope of the appended claims.

## Claims

1. A thermoplastic resin composition comprising:
(i) a high molecular weight thermoplatic resin comprising a poly(vinyl aromatic) compound, a poly(diene) and a poly (acrylonitrile);
(ii) an amorphous polyamide resin.

2. A composition as defined in Claim 1 which comprises from about 2 to about 98 percent by weight of said thermoplastic resin and from about 98 to about 2 percent by weight of said amorphous polyamide.

3. A composition as defined in Claim 2 which comprises from about 10 to about 90 percent by weight of said thermoplastic resin and from about 90 to about 10 percent by weight of said amorphous polyamide.

4. A composition as defined in Claim 1 wherein said amorphous polyamide is substantially transparent.

5. A composition as defined in Claim 1 wherein said amorphous polyamide has no distinct melting point.

6. A composition as defined in Claim 1 wherein said amorphous polyamide has a heat of fusion of about 1 cal/gram or less.

7. A composition as defined in Claim 1 wherein said amorphous polyamide has side chain substitution.

8. A composition as defined in Claim 1 wherein said polyamide is polymerized from monomers comprising non-symmetric monomers.

9. A composition as defined in Claim 10 wherein said non-symmetric monomers comprise odd-chain diamines and diacids, and meta aromatic diamines and diacids.

10. A composition as defined in Claim 1 wherein said polyamide is a copolymer of at least two nylons selected from the group consisting of nylon 6, 6/6, 11, 12, 6/3, 4/6, 6/4, 6/10 or 6/12.

11. A composition as defined in Claim 1 wherein said thermoplastic resin (i) comprises units derived from a styrene, a conjugated diene compound, and acrylonitrile.

12. A composition as defined in Claim 11 wherein said thermoplastic resin (i) comprises a grafted interpolymerization product of butadiene, styrene and acrylonitrile.

13. A composition as defined in Claim 12 wherein said grafted interpolymerization product comprises from about 30% to about 70% by weight styrene 10% to about 40% by weight acrylonitrile; the remainder being butadiene.